# EUROPEAN PATENT APPLICATION

(11) **EP 4 715 353 A1**
(43) Date of publication of application: **25.03.2026**
(21) Application number: 24425046.0
(22) Date of filing: 18.09.2024
(51) Int. Cl.: G01K 7/02, G01N 27/00, G01R 19/00

(54) **METHOD AND CONTACT LAYER FOR MEASURING A VOLTAGE INDUCED BY A TEMPERATURE DIFFERENCE BETWEEN DIFFERENT POSITIONS ALONG A SAMPLE**

(71) Applicant: Terra Quantum AG, 9000 St. Gallen (CH); Leibniz-Institut für Festkörper- und Werkstoffforschung Dresden e.V., 01069 Dresden (DE); Consiglio Nazionale Delle Ricerche - CNR, 00185 Roma (IT)
(72) Inventor: Ceccardi, Michele, 00185 Rome (IT); Pallecchi, Ilaria, 00185 Rome (IT); Caglieris, Federico, 00185 Rome (IT); Shokri, Sanaz, 01069 Dresden (DE); Confalone, Tommaso, 01069 Dresden (DE); Nielsch, Kornelius, 01069 Dresden (DE); Poccia, Nicola, 01069 Dresden (DE); Vinokur, Valerii M., St. Gallen (CH)
(74) Representative: Lucke, Andreas

(57) **Abstract**

A method is provided for measuring a voltage between a first position and a second position along a sample. Said voltage is induced by a temperature gradient in a region between the first position and the second position. A contact layer is provided separate from the sample. The contact layer comprises a silicon nitride layer and a plurality of conductive contact elements. The plurality of conductive contact elements comprises a first conductive contact element and a second conductive contact element. The silicon nitride layer electrically insulates said first and second conductive contact elements from one another. The method comprises arranging the contact layer over the sample such that the first conductive contact element forms a first electrical contact with the sample at the first position along the sample and that the second conductive contact element forms a second electrical contact with the sample at the second position along the sample. The method further comprises providing heat to the sample to generate said temperature difference, and measuring the voltage between the first conductive contact element and the second conductive contact element. Also, a contact layer for said method is provided. The contact layer comprises the silicon nitride layer, the conductive contact elements, and a heating element adapted to provide the heat to the sample to generate said temperature gradient. The silicon nitride layer is sufficiently thin for the contact layer to be mechanically flexible. Optionally, the contact layer comprises at least one temperature sensor for measuring the temperature in the vicinity of at least one of the conductive contact elements.

## Description

### FIELD OF THE DISCLOSURE

The present disclosure relates to a method and an apparatus for measuring a volt-age induced by a temperature difference between different positions along a sample, said voltage also being referred to as a thermoelectric voltage, and in particular to a contact layer comprising silicon nitride and to the use thereof for measuring the thermoelectric voltage.

### BACKGROUND

To measure a thermoelectric voltage generated in a sample, or the voltage induced by a temperature difference between different positions along said sample, respec-tively, electrical contacts are placed at said different positions along said sample. Thermo-couples are attached as close as possible to these electrical contacts to accurately measure the temperature difference.

According to some techniques known from the prior art, the electrical contacts are formed using mechanical clamping, wherein metal wires or leads, typically gold, copper, or silver, are clamped to the sample using spring-loaded probes. This approach pro-vides a simple connection but can suffer from variable contact resistance if the pressure or surface roughness is uneven. Soldering is another technique for forming the electrical con-tacts, often used for materials that can withstand moderate heat without degradation. Low-melting-point solders, such as indium or tin alloys, are applied to create a permanent, low-resistance electrical contact. Metal deposition techniques such as evaporation or sputtering are employed, for example for samples where highly stable, low-resistance contacts are nec-essary. Thin layers of metals like gold, silver, or platinum are evaporated or sputtered onto the surface, followed by attaching wires with conductive adhesives. For more delicate sam-ples, conductive epoxies or pastes containing silver or gold particles can be used to form the contact without applying heat. In cases where surface oxidation or contamination might interfere with contact quality, surface treatment techniques such as polishing, cleaning with acids or solvents, or plasma treatment are applied before contact formation.

For a precise measurement, the sample surface, on which the electrical con-tacts are placed, should be clean and smooth to ensure uniform contact. The sample as well as the electrical contacts should be thermally and electrically stable to avoid introducing noise or resistance artifacts.

### SUMMARY OF THE DISCLOSURE

It is an object of this invention to provide a method and an apparatus that overcomes one or more of the disadvantages of known techniques.

According to a first aspect, a method is provided for measuring a voltage between a first position and a second position along a sample. Said voltage is induced by a temperature gradient in a region between the first position and the second position. The method comprises providing a contact layer separate from the sample. The contact layer comprises a silicon nitride layer and a plurality of conductive contact elements. The plurali-ty of conductive contact elements comprises a first conductive contact element and a sec-ond conductive contact element. The silicon nitride layer electrically insulates said first and second conductive contact elements from one another. The method comprises arranging the contact layer over the sample such that the first conductive contact element forms a first electrical contact with the sample at the first position along the sample and that the second conductive contact element forms a second electrical contact with the sample at the second position along the sample. The method comprises providing heat to the sample to generate said temperature gradient, and measuring the voltage between the first conductive contact element and the second conductive contact element.

This method, initially providing the conductive contact elements separate from the sample in a contact layer comprising a silicon nitride layer electrically insulating the conductive contact elements from one another, can be advantageously applied to a sample which is chemically reactive and/or sensitive to mechanical impact, in particular at its surface. By providing the conductive contact elements and the contact layer initially sep-arate from the sample and then arranging it over the sample, which can be done in a very gentle manner, chemical reactions at the sample surface, which might take place during metal deposition or when a conductive adhesive is attached to the sample to form electrical contacts, are minimized, and also the mechanical impact onto the sample is minimized.

Moreover, the method allows for arranging the contact layer and/or the sili-con nitride layer over the sample to encapsulate that part of the surface of the sample, on which the measurement is performed, from an environmental impact such as an oxygen-containing or a water-containing atmosphere, such as air. This further improves the ap-plicability of the method to perform reliable measurements on a sample being chemically reactive and/or sensitive to mechanical impact.

Moreover, the silicon nitride layer beneficially supports the formation of con-ductive contact elements therein on microscopic (i.e., sub-millimeter) length scales, for ex-ample with a sub-millimeter distance between the conductive contact elements. The respec-tive length scales, or said distance, respectively, determines the size of the portion of the sample having an influence on said voltage being measured. The respective portion of the sample may be referred to as an effective sample portion, and the size of the respective por-tion of the sample may also be referred to as an effective sample size. The method thus al-lows for measuring the voltage induced by the temperature gradient for a smaller (e.g., sub-millimeter) effective sample size, or for a smaller (e.g., sub-millimeter) distance between the first position and the second position, respectively. Since a reliable measurement of a ther-moelectric effect (being said voltage induced by the temperature gradient in the region be-tween the first position and the second position along the sample; said thermoelectric effect also being referred to as thermoelectric voltage in the context of this disclosure) requires the sample, and in particular its surface, to be homogeneous within said effective sample size, or between the first position and the second position, respectively, the method thus beneficially reduces the requirements regarding the length scale on which the sample needs to be homogeneous. For example, the method allows for measuring the thermoelectric effect even on a sample having a microscopic (i.e., sub-millimeter) size or width, or with a micro-scopic (i.e., sub-millimeter) spatial resolution on a larger sample, e.g., by providing the con-tact layer with a sufficient number of conductive contact elements (e.g., by providing the contact layer with at least 10 or with at least 20 conductive contact elements) defining mul-tiple effective sample portions on the sample.

According to some embodiments, the contact layer provided separately from the sample further comprises a heating element, the silicon nitride layer electrically insulating the conductive contact elements from the heating element. In respective embodiments, the heat may be provided to the sample from said heating element.

Respective embodiments beneficially allow for providing the heat to the sample in a well-controlled way.

For example, respective embodiments allow for providing the heat to the sample from a position of the heating element (also referred to as a heater in the context of this disclosure ) close to at least one of the first position and the second position, such that a significant temperature gradient in the region between the first position and the second position can be achieved using a moderate heating power applied to the heating element.

Moreover, using the contact layer comprising the heating element, the heating ele-ment can be placed with a microscopic (i.e., sub-millimeter) distance to the first position or the second position. This microscopic distance beneficially supports the formation of an effectively line-shaped heating element, i.e., of a heating element having a spatial extension (for example, in a direction perpendicular to a reference line connecting the first position and the second position) much larger than said microscopic distance. Such a line-shaped heating element beneficially supports the formation of a homogeneous heat gradient in the region of the sample between the first position and the second position and/or in an effec-tive sample portion close to said region of the sample between the first position and the second position and influencing the result of the voltage measurement.

According to some embodiment, the region between the first position and the second position is defined by a line connecting the first position and the second position. Alterna-tively, or in addition, the region between the first position and the second position may be defined by a line connecting the first conductive contact element and the second conductive contact element.

Said temperature gradient may comprise a component along a line connecting the first position and the second position, and/or connecting the first conductive contact ele-ment and the second conductive contact element, respectively, and/or the temperature gra-dient may comprise a component perpendicular to the line connecting the first position and the second position, and/or connecting the first conductive contact element and the second conductive contact element, respectively.

The conductive contact elements may be electrically conductive contact elements, and/or the conductive contact elements may be adapted to provide an electrical connection through them.

For example, the heating element may be pre-calibrated, in particular such that, for a specific geometry of the sample, of the contact layer, and, if present, of a substrate, the provision of a preselected amount of heat to the sample from said heating element results in a temperature gradient in the region between the first position and the second position along the sample being known from the pre-calibration.

According to some embodiments, in the process step of arranging the contact layer over the sample, the heating element is arranged in a vicinity of the sample.

According to some embodiments, the contact layer is arranged over the sample such that the heating element arranged over the sample is electrically insulated from the sample, in particular by the silicon nitride layer or at least in part by the silicon nitride layer.

Respective embodiments minimize a possible interference of the provision of heat to the sample via the heating element (which may, according to some embodiments, involve the application of a current through the heating element) with the voltage meas-urement. They thus improve the accuracy of the voltage measurement.

According to some embodiments, a spatial extension of the heating element along a direction perpendicular to a reference line connecting the first position and the second posi-tion exceeds a minimum distance between the heater and any of the first position and the second position, in particular at least by a factor of two or at least by a factor of three.

Respective embodiments improve the homogeneity of the temperature gradients in a region between the first position and the second position along the sample, thus improving the accuracy of the voltage measurement.

The heating element may comprise or be a resistor.

The resistor may have a resistance of at least 10 Ohm or at least 50 Ohm or at least 100 Ohm and/or may have a cross-sectional width in the range from 1 µm to 10 µm.

According to some embodiments, the heating element has a thickness of 200 nm or less, preferably of 100 nm or less. The thickness may refer to a spatial extension along the vertical direction when the contact layer is arranged over the sample.

In the process step of arranging the contact layer over the sample, the contact layer may be arranged over the sample such that the heating element is not arranged above the sample along the vertical direction.

Respective embodiments further minimize a possible interference of the provision of heat to the sample via the heating element (which may, according to some embodiments, involve the application of a current through the heating element) with the voltage meas-urement.

The heating element may be arranged at a bottom surface of the silicon nitride layer when the contact layer is arranged over the sample.

Respective embodiments improve the provision of heat to the sample via the heating element. They permit to achieve a significant temperature gradient in the region between the first position and the second position, for example by applying only a small current through a heating element having the form of a resistor. The small applied current mini-mizes a possible interference of the provision of heat to the sample via the heating element with the voltage measurement between the first position and the second position.

When the contact layer is arranged over the sample, the heating element may be arranged closer to a surface of the silicon nitride layer contacting the sample than to a top surface of the silicon nitride layer.

Respective embodiments improve the provision of heat to the sample via the heating element, with the advantages described above.

A distance between the heating element and one or both of the first conductive con-tact element and the second conductive contact element may be 0.5 mm or less, in particu-lar in the contact layer provided separate from the sample and/or after arranging the con-tact layer over the sample.

Simulations have demonstrated that in a region defined by said distance, the tem-perature gradient generated by the provision of heat via said heating element is particularly homogeneous, improving the accuracy of the voltage measurement.

The silicon nitride layer may be sufficiently thin for the contact layer to be mechani-cally flexible. Alternatively, or in addition, the silicon nitride layer and/or the contact layer may have a thickness of 1 µm or less.

Respective embodiments beneficially support the handling of the contact layer and the process step of arranging it over the sample.

Moreover, since the contact layer according to said embodiments is mechanically flexible, it can bend over the edges of the sample when being arranged over the sample, thus encapsulating the sample and acting as a barrier against potentially harmful environmen-tal influences, such as chemically aggressive species (e.g., water or oxygen) or UV radiation. Thus, the surface quality of the sample is improved, improving the accuracy of the voltage measurement.

According to some embodiments, the sample is located above a thermally insulating substrate when the heat is provided to the sample and when the voltage is measured be-tween the first conductive contact element and the second conductive contact element, in particular, wherein the thermally insulating substrate comprises fused silica and/or the thermally insulating substrate has a heat conductivity smaller than 2 W/(m · K).

Respective embodiments maximize the thermal resistance for a flow of the provided heat. They thus maximize the temperature gradient achieved when a specific amount of heat is provided, the maximized temperature gradient (e.g., in the region be-tween the first position and the second position) improving the accuracy of the measure-ment of the thermoelectric effect. Vice versa, respective embodiments allow for achieving a predefined temperature gradient (e.g., in the region between the first position and the sec-ond position) with a minimum of heat provision, which for example in embodiments with a heating element in the form of a resistor minimizes the current which needs to be applied through the resistor, thus minimizing its interference with the voltage measurement.

According to some embodiments, in the process step of arranging the contact layer over the sample, the sample is encapsulated between the contact layer and the thermally insulating substrate, in particular in an air-tight manner.

Reference is made to the advantages of encapsulating the sample described above.

According to some embodiments, the thermally insulating substrate is electrically insulating.

According to some embodiments, the sample is located above a polished surface of the thermally insulating substrate.

According to some embodiments, the contact layer provided separate from the sam-ple further comprises at least one temperature sensor. In respective embodiments, in the process step of arranging the contact layer over the sample, the at least one temperature sensor may be arranged in a vicinity of one of the first electrical contact or the second elec-trical contact. In respective embodiments, the method may further comprise measuring, using the at least one temperature sensor, a temperature in the vicinity of one of the first electrical contact or the second electrical contact when the voltage is measured between the first conductive contact element and the second conductive contact element.

The provision of at least one temperature sensor as a part of the contact layer al-lows for positioning the temperature sensor in a close proximity of the first position and/or to the second position in the process step of arranging the contact layer over the sample. This close proximity improves the accuracy when determining the temperature at the re-spective first position and/or the second position from a temperature measured at the at least one temperature sensor. This improves the reliability of the thermal electric measure-ment further.

Moreover, since the at least one temperature sensor is provided as a part of the con-tact layer, it has a well-defined distance from the conductive contact elements, or from the positions along the sample, respectively, such that any difference between the temperature at the least one temperature sensor and the temperature at the associated position(s) along the sample resulting from said distance can be corrected. This improves the reliability of the thermal electric measurement further.

The at least one temperature sensor may comprise or be a resistor, the resistor hav-ing a temperature-dependent resistance, and the silicon nitride layer electrically insulating the conductive contact elements from the at least one resistor.

A resistor allows for measuring the absolute temperature by comparing its momen-tary (e.g., measured) resistance against a calibration curve. This is a major advantage over thermocouples, which measure a temperature difference to a reference point, requiring a precisely known temperature of the reference point to determine an absolute temperature at the thermocouple. The temperature sensor using the resistor intrinsically gives the abso-lute temperature, improving the reliability of the measurement of the thermoelectric effect.

Moreover, a resistor allows for miniaturization and can be cointegrated in the contact layer with the other components of the contact layer in a straightforward man-ner. This is an immediate consequence of the silicon nitride layer comprised in the contact layer, the silicon nitride layer facilitating microprocessing with known techniques.

According to some embodiments, the measuring of the temperature in the vicinity of one of the first electrical contact or the second electrical contact comprises determining a resistance of the resistor to determine said temperature based on the determined re-sistance.

In respective embodiments, the resistor of the at least one temperature sensor may have a smaller resistance than the resistor of the heating element.

The resistance of the resistor of the at least one temperature sensor may have a stronger temperature dependence than the resistance of the resistor of the heating element.

Determining the resistance of the resistor may use a four-point measurement.

According to some embodiments, in the process step of arranging the contact layer over the sample, the contact layer is arranged over the sample such that the at least one temperature sensor is arranged above, in particular directly above, the sample along the vertical direction.

According to some embodiments, when the contact layer is arranged over the sam-ple, the at least one temperature sensor is arranged in direct physical contact with the sam-ple.

According to some embodiments, when the contact layer is arranged over the sam-ple, the at least one temperature sensor is arranged at a bottom surface of the silicon ni-tride layer.

According to some embodiments, when the contact layer is arranged over the sam-ple, the at least one temperature sensor is arranged closer to a surface of the silicon nitride layer contacting the sample than to a top surface of the silicon nitride layer.

The embodiments according to any of the previous four paragraphs each and even more so in combination, reduce the distance between the temperature sensor and the first/second positions along the sample, thus improving the accuracy of the temperature measurement at the respective position(s), and hence the accuracy of the overall measure-ment of the thermoelectric effect. In particular, the combination of the at least one temper-ature sensor being arranged above the sample along the vertical direction with the fea-ture(s) according to any of the foregoing three paragraphs ensures that the distance be-tween the temperature sensor and the first/second positions along the sample is reduced both along the vertical and the horizontal direction, which is particularly beneficial.

According to some embodiments, the contact layer provided separate from the sample further comprises a plurality of temperature sensors including the at least one temperature sensor and at least one additional temperature sensor. In respective embodi-ments, the method may further comprise in the process step of arranging the contact layer over the sample, arranging the at least one temperature sensor in a vicinity of the first elec-trical contact and arranging the at least one additional temperature sensor in a vicinity of the second electrical contact. In respective embodiments, the method may further comprise measuring, using the at least one temperature sensor, a temperature in the vicinity of the first electrical contact when the voltage is measured between the first conductive contact element and the second conductive contact element. In respective embodiments, the method may further comprise measuring, using the at least one additional temperature sensor, an additional temperature in the vicinity of the second electrical contact when the voltage is measured between the first conductive contact element and the second conductive contact element.

According to various embodiments, one or all of the features specified above in the context of the at least one temperature sensor apply correspondingly to the at least one additional temperature sensor.

According to various embodiments, one or all of the features specified above in the context of the temperature in the vicinity of one of the first electrical contact or the second electrical contact apply correspondingly to the additional temperature.

The provision of several temperature sensors, at least one associated with each of the first position and the second position along the sample, improves the accuracy of the temperature measurement further, thus improving the accuracy of the overall measure-ment of the thermoelectric effect.

According to some embodiments, the contact layer comprises electrical contact structures above the silicon nitride layer, each of the conductive contact elements being electrically connected to at least one of said electrical contact structures via a respective lead comprised in the contact layer, and wherein the voltage between the first conductive contact element and the second conductive contact element is measured via the electrical contact structures.

Respective electrical contact structures, for example at the top surface of the contact layer, beneficially permit to electrically connect the contact layer with its microscopically sized components or distances between them to a macroscopic apparatus. They thus bridge between microscopic measurement and macroscopic machinery, such as a voltage meter or an electrical power source.

The electrical contact structures may be dimensioned to be suitable for wire bonding thereto.

According to some embodiments, each of the conductive contact elements is con-nected to at least one of the electrical contact structures via a through via.

According to some embodiments, in the process step of providing the heat to the sample, a suitable amount of heat is provided to the sample to generate a temperature gra-dient in the region between the first position and the second position in a range from 1000 K per meter of distance between the first position and the second position to 10,000 K per meter of distance between the first position and the second position.

Respective temperature gradients are particularly beneficial for performing a meas-urement of the thermoelectric effect.

The voltage between the first conductive contact element and the second con-ductive contact element may be measured while the heat is being provided to the sample.

According to some embodiments, the process step of arranging the contact layer over the sample comprises adhering a surface of a transfer device to the contact layer, wherein the surface of the transfer device is a surface of an elastomeric polymer, and re-leasing the surface of the transfer device from the contact layer by increasing the tempera-ture of the surface of the transfer device.

Increasing the temperature of the surface of the transfer device may be performed such that the temperature of the elastomeric polymer increases from below its glass transition temperature to above its glass transition temperature.

Adhering a surface of a transfer device to the contact layer may comprise adhering the adhering a surface of the transfer device to the contact layer with a temperature of the elastomeric polymer being below a glass transition temperature of the elastomeric polymer.

In respective embodiments, the elastomeric polymer may comprises or be polydime-thylsiloxane.

According to some embodiments, the method further comprises, prior to arranging the contact layer over the sample, heating the contact layer to a temperature above 90°C, in particular to desorb water from the contact layer.

Respective embodiments improve the electrical contact between the contact layer and the sample, thus improving the accuracy of the measurement of the thermoelectric ef-fect.

According to some embodiments, the method further comprises cooling at least a portion of the sample to a temperature below 0°C while the voltage between the first con-ductive contact element and the second conductive contact element is measured.

Respective embodiments improve the accuracy of the measurement of the thermoe-lectric effect and also the stability of sensitive samples during said measurement.

The first position and the second position may be positions along a surface of the sample, for example along a continuous surface of the sample or along a surface of the sample having a crystallographic orientation with respect to a bulk of the sample, in partic-ular a single crystallographic orientation with respect to the bulk of the sample.

According to a second aspect, a contact layer is provided for measuring a voltage between a first position and a second position along a sample. Said voltage is in-duced by a temperature gradient in a region between the first position and the second posi-tion. The contact layer comprises a silicon nitride layer, a plurality of conductive contact elements, and a heating element. The plurality of conductive contact elements comprises a first conductive contact element and a second conductive contact element, the silicon ni-tride layer electrically insulating said first and second conductive contact elements from one another. The heating element is adapted to provide heat to the sample to generate said temperature gradient. The silicon nitride layer is sufficiently thin for the contact layer to be mechanically flexible.

According to some embodiments, the contact layer further comprises at least one temperature sensor, in particular, wherein the at least one temperature sensor is arranged in a vicinity of one of the first conductive contact element and the second conductive con-tact element; and wherein the at least one temperature sensor is adapted for measuring the temperature in said vicinity of one of the first conductive contact element and the second conductive contact element.

According to some embodiments, the contact layer comprises a plurality of temperature sensors as described above in the context of the method.

According to some embodiments, the contact layer comprises electrical contact structures above the silicon nitride layer, each of the conductive contact elements being electrically connected to at least one of said electrical contact structures via a respective lead comprised in the contact layer, for example via a through via.

### LIST OF FIGURES

In the following, a detailed description of the present disclosure and examples thereof is given with reference to the figures, wherein
Fig. 1 schematically illustrates a method according to a first embodiment of the present disclosure;
Fig. 2a, Fig. 2b and Fig. 2c illustrate process steps of the method in further detail;
Fig. 3 schematically illustrates a contact layer for use in the method according to some embodiments;
Fig. 4 schematically illustrates the contact layer of Fig. 3, arranged over a sample;
Fig. 5 schematically illustrates the contact layer of Fig. 3, arranged over a sample with the voltage measurement of the method being performed;
Fig. 6 schematically illustrates a contact layer for use in the method according to some embodiments;
Fig. 7 schematically illustrates a contact layer for use in the method according to some embodiments;
Fig. 8 schematically illustrates a contact layer for use in the method according to some embodiments;
Fig. 9a to Fig. 9g illustrate in further detail process steps of a method;
Fig. 10a to Fig. 10i schematically illustrate a method for fabricating a contact layer for use in the method according to some embodiments;
Fig. 11 schematically illustrates a contact layer for use in the method according to some embodiments, said contact layer arranged over a sample;
Fig. 12 schematically illustrates the heat gradient along a sample while providing heat to the sample; and
Fig. 13 to Fig. 13 schematically illustrates the temperature along a horizontal direc-tion while providing heat to the sample, for different base temperatures of the sam-ple.

### DESCRIPTION OF EXAMPLES

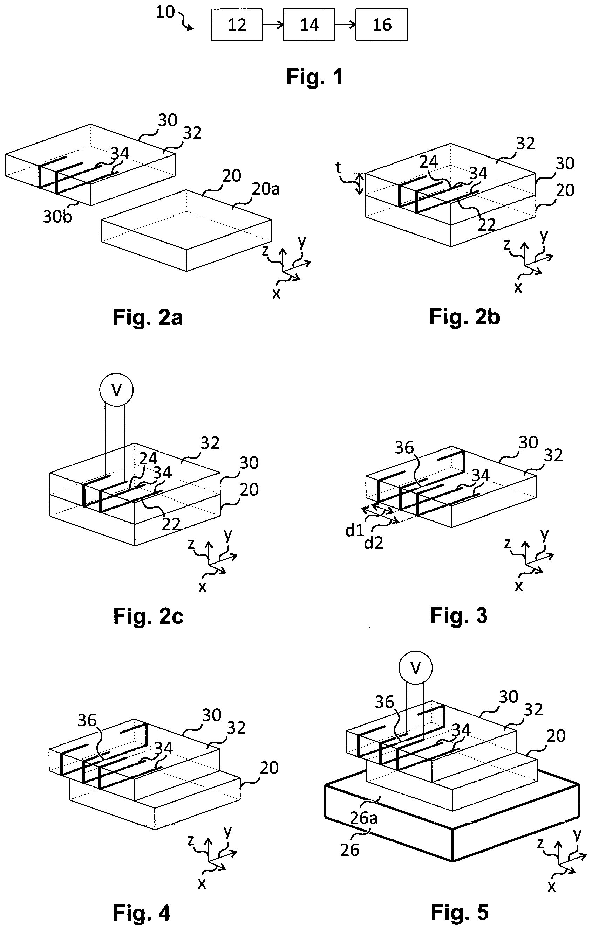

Fig. 1 illustrates a method 10 for measuring a voltage V induced by a temperature gradient in a region between a first position 22 and a second position 24 along a sample 20.

The method 10 comprises providing 12 a contact layer 30 separate from the sample 20.

The contact layer 30 comprises a silicon nitride layer 32 and a plurality of conductive contact elements 34, the plurality of conductive contact elements 34 comprising a first conductive contact element and a second conductive contact element, and the silicon nitride layer 32 electrically insulating said first and second conductive contact elements 34 from one another.

The method 10 comprises arranging 14 the contact layer 30 over the sample 20 such that the first conductive contact element forms a first electrical contact with the sam-ple 20 at the first position 22 along the sample 20 and that the second conductive contact element forms a second electrical contact with the sample 20 at the second position 24 along the sample.

The method 10 comprises providing 16 heat to the sample 20 to generate said tem-perature gradient.

The method 10 comprises measuring 18 the voltage V between the first conductive contact element and the second conductive contact element.

Fig. 2a illustrates the process step of providing 12 the contact layer 30 separate from the sample 20 in further detail.

As depicted, the contact layer 30 being separate from the sample 20 refers to a state with no mechanical contact and/or with no electrical contact between the contact layer 30 and the sample 20.

The contact layer 30 comprises the silicon nitride layer 32.

Silicon nitride is particularly suitable for microprocessing. Techniques for processing silicon nitride have been highly developed in the semiconductor industry. The developed techniques include photolithography for patterning a silicon nitride layer by coating it with a photoresist, exposing it to UV light through a mask, and then etching away the unexposed areas to create precise features. The developed techniques also include reactive ion etching, which is used to etch silicon nitride with high precision, employing plasma to remove mate-rial in a controlled manner for applications such as defining patterns in integrated circuits and MEMS (micro-electro-mechanical systems) devices. Silicon nitride layers have been processed using wet etching, which uses chemical solutions to etch away silicon nitride selec-tively. Dry etching, including deep reactive ion etching, is applied to achieve high aspect ra-tio structures. Anisotropic etching has been utilized to create well-defined, directional etch profiles. Chemical-mechanical planarization has been performed to polish and smooth the silicon nitride surface, ensuring planarity before further processing steps. With this portfo-lio of processing techniques with submillimeter resolution at hand, the use of silicon nitride is beneficial over the use of any other insulating material for the contact layer 30.

The invention further beneficially makes use of the excellent properties of silicon nitride as a passivation material. Silicon nitride has been widely used for passivation and encapsulation since it provides electrical insulation, chemical stability, and thermal stabil-ity. In semiconductor devices, it has been employed as a passivation layer to protect sensi-tive components from environmental contamination, such as moisture and ionic impuri-ties, and helps prevent oxidation of underlying materials. It is commonly employed in the fabrication of integrated circuits, solar cells, and MEMS to enhance durability and perfor-mance. In light-emitting diodes manufacturing, silicon nitride encapsulates the device to improve light output and reliability by reducing surface recombination. In thin-film transistors, particularly in organic light-emitting diodes, it acts as a protective layer to the thin-film transistor improving its electrical performance and stability.

Two conductive contact elements 34 are located at a bottom surface 30b of the sili-con nitride layer 32.

The silicon nitride layer 32 thus mechanically supports the conductive contact ele-ments 34 and electrically insulates them from one another.

In the depicted embodiment, the conductive contact elements 34 is spaced apart by a distance of 10 µm. In the depicted embodiment, the respective distance refers to the dis-tance along the horizontal x-axis.

In alternative embodiments (not shown), the distance by which the conductive con-tact elements 34 are spaced apart amounts to up to 500 micrometres.

In the depicted embodiment, the conductive contact elements 34 each comprise an adhesion metal layer comprising chromium on the silicon nitride layer 32 and electrically highly conductive metal on the adhesion layer. In the depicted embodiment, the highly con-ductive metal is gold.

In alternative embodiments (not shown), the adhesion metal layer comprises titani-um, nickel, tantalum, titanium, or a combination thereof and/or with the chromium.

In alternative embodiments (not shown), the highly conductive metal comprises copper, aluminum, or a combination thereof and/or with the gold.

An electrical line extends away from each of the conductive contact elements 34.

The sample 20 has an upper surface 20a.

The method is applicable to a wide variety of samples, in particular to electrically insulating or semiconducting samples.

Fig. 2b illustrates the process step of arranging 14 the contact layer 30 over the sample 20 in further detail. The contact layer 30 is arranged over the sample 20 such that the first conductive contact element forms a first electrical contact with the sample 20 at the first position 22 along the sample 20 and that the second conductive contact element forms a second electrical contact with the sample 20 at the second position 24 along the sample 20.

In the depicted embodiment, the contact layer 30 as a horizontal size similar to the horizontal size of the sample 20. More specifically, the contact layer 30 has withs along the horizontal directions x, y similar to the withs along the horizontal directions x, y of the sample 20.

The thickness t of the contact layer 30, or of the silicon nitride layer 32, respectively, is in the submillimeter range (i.e., less than 1 mm). Consequently, the contact layer 30, or the silicon nitride layer 32, respectively, is mechanically flexible. The mechanical flexibility refers to bendability around at least one or both horizontal directions x, y, the horizontal directions x, y referring to an orientation of the contact layer 30 with which it is to be ar-ranged over the sample 20.

The mechanical flexibility ensures that, when the contact layer 30 is arranged over the sample 20, the contact layer can bend around at least one of said horizontal directions x, y, such that the conductive contact elements 34 reliably form electrical contacts to the sample 20. This way, the mechanical flexibility of the contact layer 30 improves the accura-cy of a subsequent voltage measurement.

Fig. 2c illustrates the process steps of providing 16 heat to the sample 20 to generate said temperature gradient, and of measuring 18 the voltage V between the first conductive contact element 34 and the second conductive contact element 34.

In Fig. 2c, the provision of heat to the sample 20 is not explicitly depicted.

According to an embodiment (not shown), the heat is provided to the sample 20, by focusing a beam of electromagnetic radiation, such as a light beam, through the silicon ni-tride layer 32 onto a point on the sample 20. According to an alternative embodiment a heater such as a resistive heater is provided in the vicinity of the conductive contact ele-ments 34. In some embodiments (not shown), the heater is provided separately from the contact layer 30. However, preferably, the heater is provided in the form of the heating ele-ment 36 comprised in the contact layer 30, as will be described below in detail.

Preferably, the heat is provided to the sample 20 such that a temperature gradient across the sample 20 between the positions 24 along the sample, or between the conductive contact elements 34 contacting the sample 20, respectively, is in a range from 1000 K/m to 100000 K/m.

Notably, depending on the details of the information that is to be extracted about the sample from the measurement, the temperature is applied to the sample 20 such that the temperature gradient is directed along a reference line interconnecting the conductive con-tact elements 34 (said reference line being parallel to the x axis of the depicted embodi-ment), or perpendicular thereto (i.e., parallel to the y axis of the depicted embodiment).

According to some embodiments of the method, the temperature is applied to the sample 20 such that the temperature gradient is directed along the reference line intercon-necting the conductive contact elements 34. Respective embodiments of the method may also be referred to as a measurement of the longitudinal thermoelectric effect.

According to some embodiments of the method, the temperatures is applied to the sample 20 such that the temperature gradient is perpendicular to the reference line inter-connecting the conductive contact elements 34. Respective embodiments of the method may also be referred to as a measurement of the transverse thermoelectric effect.

Here and in the following, the term "transverse thermoelectric effect" (or "trans-verse thermoelectric voltage") refers to a voltage or an electric field induced in a direction perpendicular to the direction of the temperature gradient. The term "longitudinal thermoe-lectric effect" (or "longitudinal thermoelectric voltage") refers to a voltage or an electric field induced along the direction of the temperature gradient.

The voltage V is measured by connecting a voltage meter to the electrical lines elec-trically connected to the conductive contact elements. In the depicted embodiment, the volt-age V is measured while the heat is being provided to the sample 20.

In some embodiments (not shown), the heat is provided in a pulsed manner. In some of the respective embodiments the voltage V is measured continuously, and in others the voltage is measured intermittently. According to some of said embodiments, the voltage is measured intermittently while the heat is not being applied.

Fig. 3 schematically illustrates a contact layer 30 for use in the method 10 according to some embodiments.

The contact layer 30 of Fig. 3 is similar to the contact layer 30 described above. Sim-ilar components are indicated with identical reference numerals. For the sake of brevity, they will not be described again, but reference is made to the corresponding detailed de-scription above. The following description focuses on the modifications introduced in the embodiment of Fig. 3.

The contact layer 30 of Fig. 3 further comprises a heating element 36.

The heating element 36 is arranged on the same side, or on the same surface, re-spectively, of the contact layer 30, or of the silicon nitride layer 32, respectively as the con-ductive contact elements 34. In other words, both the heating element 36 and the conduc-tive contact elements 34 are arranged on the bottom surface 30b of the contact layer 30, or of the silicon nitride layer 32, respectively.

The silicon nitride layer 32 electrically insulates the heating element 36 from any of the conductive contact elements 34.

The silicon nitride layer 32 mechanically supports the heating element 36.

Electrical lines extend away from two different positions along the heating element 36.

In the depicted embodiment, the heating element 36 is a resistive heater. In other words, the heating element 36 comprises a resistor.

The resistor of the depicted embodiment has a width of three micrometres, a length of 190 micrometres, a thickness of 100 nm and resistance of 190 Ohm.

Preferably, the thickness of the heating element 36 does not exceed 200 nm, and even more preferably does not exceed 100 mm. A respective heating element 36 can well be integrated between the contact layer 30 and the sample 20, without causing any buckling of either of the contact layer 30 and the sample 20. Moreover, in embodiments, wherein the heating element 36 comprises a resistor, a respective thickness of the resistor beneficially ensures the resistance of the heating element 36 suitable to provide the heat to the sample 20 using the heating element 36.

Preferably, the width of the heating element 36 is in a range from 1 micrometres to 10 micrometres. In combination with the aforementioned thickness, which facilitates inte-gration of the heating element 36 between the contact layer 30 and the sample 20, a respec-tive width beneficially ensures the resistance of the heating element 36 suitable to provide the heat to the sample 20 using the heating element 36.

In the depicted embodiment, the heating element 36 comprises an adhesion metal layer comprising titanium on the silicon nitride layer 32 a high-melting-point metal on the adhesion layer. In the depicted embodiment, the high-melting-point metal comprises plati-num.

In alternative embodiments (not shown), the adhesion metal layer comprises chro-inium, nickel, tantalum, or a combination thereof and/or with the titanium.

When said heating element 36 is used in the contact layer 30, a heating power of 0.1 mW - 10 mW is typically applied in the process step of providing heat to the sample 20, with said provision of heat to the sample 20 being performed via the heating element 36. Details of the heating power depend on the specifics of the sample 20. In most cases, the heating power is in a range from 0.1 mW to 2 mW.

A respective provision of heat is well-suited to generate a voltage between the first position and the second position along the sample, with said voltage being sufficiently large to be measured using developed voltage measuring instruments, and in the presence of typ-ical measuring noise. This is related to the fact that, for most samples, the voltage between the first position and the second position along the sample increases in an approximately linear manner with the temperature gradient in the region between the first position and the second position along the sample, with a linear coefficient in the range from 1 uV/K to 1000 uV/K.

The current through the resistor comprised in the heating element 36 is preferably kept below 10 mA. This avoids damage to the heating element 36 and to the sample 20.

According to the embodiment depicted in Fig. 3, the conductive contact elements 34 are arranged at different distances d1, d2 from the heating element 36. A respective contact layer 30 may also be referred to as a contact layer 30 for a measurement of the longitudi-nal thermoelectric effect, or the respective heating element 36 and conductive contact ele-ments 34 may be referred to as heating element 36 and conductive contact elements 34 for a measurement of the longitudinal thermoelectric effect, respectively.

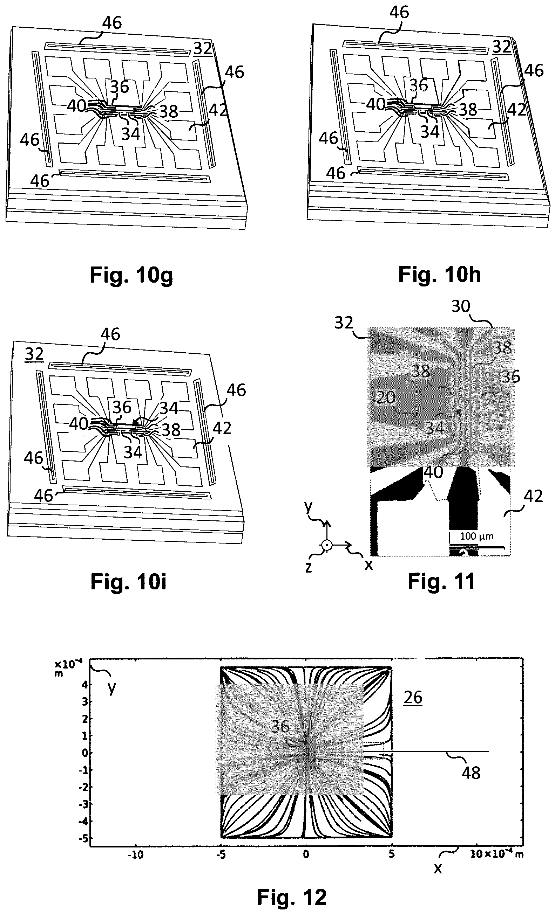

According to alternative embodiments (not shown in the context of Fig. 3, but visi-ble in Fig. 11), the conductive contact elements 34 are arranged at the same distance d1 = d2 from the heating element 36. A respective contact layer 30 may also be referred to as a contact layer 30 for a measurement of the transverse thermoelectric effect, or the respec-tive heating element 36 and conductive contact elements 34 may be referred to as heating element 36 and conductive contact elements 34 for a measurement of the transverse ther-moelectric effect, respectively.

According to some embodiments (not shown in the context of Fig. 3, but visible in Fig. 11), the contact layer 30 comprises at least three conductive contact elements 34 or at least four conductive contact elements 34, wherein at least one pair of the respective con-ductive contact elements 34 is arranged at different distances d1, d2 from the heating ele-ment 36, and at least one pair of the respective conductive contact elements 34 is arranged at the same distance d1 = d2 from the heating element 36. A respective contact layer may be referred to as a contact layer for a measurement of both the longitudinal thermoelectric effect and the transverse thermoelectric effect, or the respective heating element 36 and conductive contact elements 34 may be referred to as heating element 36 and conductive contact elements 34 for a measurement of both the longitudinal thermoelectric effect and the transverse thermoelectric effect, respectively.

According to embodiments, the contact layer 30 according to any of the embodi-ments of this disclosure is formed as a contact layer for a measurement of the longitudinal thermoelectric effect, i.e., comprising conductive contact elements 34 arranged at different distances d1, d2 from the heating element 36.

According to embodiments, the contact layer 30 according to any of the embodi-ments of this disclosure is formed as a contact layer for a measurement of the transverse thermoelectric effect, i.e., comprising conductive contact elements 34 arranged at the same distance d1 = d2 from the heating element 36.

According to embodiments, the contact layer 30 according to any of the embodi-ments of this disclosure is formed as a contact layer 30 for a measurement of both the lon-gitudinal thermoelectric effect and the transverse thermoelectric effect, i.e., comprising both conductive contact elements 34 arranged at different distances d1, d2 from the heat-ing element 36 and conductive contact elements 34 arranged at the same distance d1 = d2 from the heating element 36.

Fig. 4 shows the contact layer 30 having been arranged over the sample 20.

In this situation, the heating element 36 is not placed directly above the sample 20.

In other words, no vertical reference line exists, which would intersect both the sam-ple 20 and the heating element 36.

In particular, in embodiments wherein the heating element 36 comprises or is a re-sistor, a respective arrangement beneficially minimizes any voltage drop across the sample 20 or its surface, respectively, of the heating voltage applied to the resistor. This improves the accuracy of the voltage measurement via the conductive contact elements 34.

Fig. 5 shows a modification of the method 10, wherein the sample 20 is located above a thermally insulating substrate 26, or a surface 26a thereof, respectively.

In the depicted embodiment, the thermally insulating substrate 26 is made from fused silica. In alternative embodiments (not shown) the thermally insulating substrate is made from polyimide, aerogel, porous silicon, or a polyurethane foam. Preferably, the ma-terial of the thermally insulating substrate has a heat conductivity smaller than 2 W/(m · K).

A respective substrate beneficially provides mechanical support to the sample 20, without significantly reducing the temperature gradient between the positions 24 along the sample defined by the conductive contact elements 34.

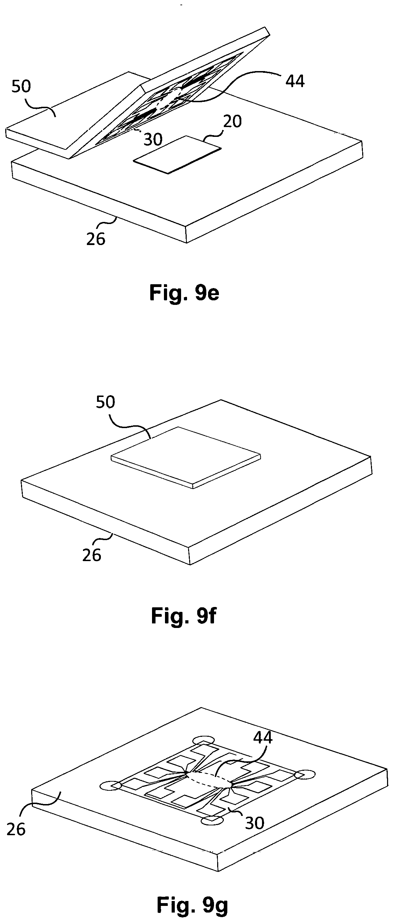

Further, in embodiments, wherein both the contact layer 30 and the thermally insu-lating substrate 26 are larger in the horizontal plane than the sample 20, in the process step of arranging the contact layer 30 over the sample 20, an encapsulation of the sample 20 can be formed by the contact layer 30 and the thermally insulating substrate 26. This encapsulation acts as a barrier against potentially harmful environmental influences, with the advantages described above. For a detailed description of the respective embodiment, reference is made to Fig. 9e and Fig. 9f.

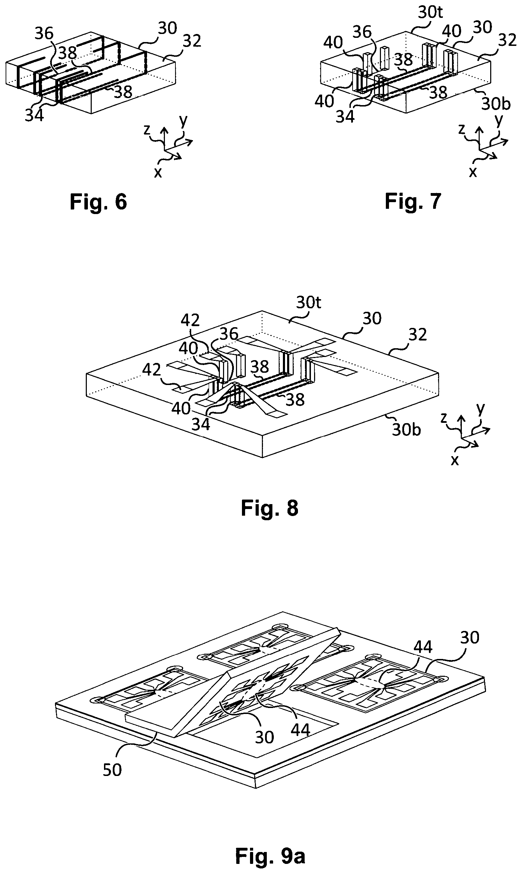

Fig. 6 schematically illustrates a contact layer 30 for use in the method 10 according to some embodiments.

The contact layer 30 of Fig. 6 is similar to the contact layer 30 described above in the context of the other embodiments. Similar components are indicated with identical ref-erence numerals. For the sake of brevity, they will not be described again, but reference is made to the corresponding detailed description above. The following description focuses on the modifications introduced in the embodiment of Fig. 6.

The contact layer 30 of Fig. 6 further comprises temperature sensors 38.

The temperature sensors 38 are arranged on the same side, or on the same surface, respectively, of the contact layer 30, or of the silicon nitride layer 32, respectively as the conductive contact elements 34. In other words, both the temperature sensors 38 and the conductive contact elements 34 are arranged on the bottom surface 30b of the contact lay-er 30, or of the silicon nitride layer 32, respectively.

The silicon nitride layer 32 electrically insulates the temperature sensors 38 from any of the conductive contact elements 34.

The silicon nitride layer 32 electrically insulates the temperature sensors 38 from each other.

The silicon nitride layer 32 mechanically supports the temperature sensors 38.

Electrical lines extend away from two different positions along each of the tempera-ture sensors 38.

The contact layer depicted in Fig. 6 comprises two temperature sensors 38, each lo-cated in the vicinity of one of the conductive contact elements 34. In alternative embodi-ments (not shown), the contact layer 30 comprises only one of the temperature sensors 38 shown in Fig.6, the respective temperature sensor 38 being located in the vicinity of one of the conductive contact elements 34.

A temperature sensor 38 or temperature sensors 38 in the vicinity of at least one of the conductive contact elements 34 are suitable to give direct information about the tem-perature at their respective positions, thus allowing to conclude the temperature at the posi-tions at the conductive contact elements 34.

Hence, when the voltage is measured between the conductive contact elements 34, the measured voltage can be associated to a temperature at at least one of the positions 24 along the sample as defined by the respective conductive contact elements 34, or, even more advantageously, to the temperature gradient in the region between the positions 24 along the sample as defined by the conductive contact elements 34. Thus, a method using a re-spective contact layer 30, or a respective measurement of temperature(s) using the temper-ature sensor(s) 38 gives a richer data set, allowing, for example, to conclude material pa-rameters associated with the sample 20.

In the depicted embodiment, each of the temperature sensors 38 is a resistor having a temperature-dependent resistance. In alternative embodiments, different types of tem-perature sensors 38 are used. However, the resistor having a temperature-dependent re-sistance is preferred, since measuring its resistance and comparing the measured re-sistance against a calibration curve gives direct information about the absolute tempera-ture at the temperature sensors 38. This is an advantage over some alternative types of temperature sensors 38, such as thermocouples, which measure a temperature difference to a reference point at the opposite contact of the thermocouple. The measurement of the ab-solute temperature is particularly beneficial, for example in applications wherein material parameters associated with the sample 20 are to be determined.

In the depicted embodiment, the temperature sensors 38 each comprise an adhesion metal layer comprising chromium on the silicon nitride layer 32, and a temperature-dependent-resistance material on the adhesion layer. In the depicted embodiment, the tem-perature-dependent-resistance material is gold.

In alternative embodiments (not shown), the adhesion metal layer comprises titani-um, nickel, tantalum, titanium, or a combination thereof and/or with the chromium.

In the depicted embodiment, the thickness of the adhesion metal layer is 4 nm, and the thickness of the gold thereover is 80 mm.

In the depicted embodiment, the width of each of the temperature sensors 38 is 4 µm. The length of each of the temperature sensors 38 is 80 µm.

In the depicted embodiment, the temperature sensors 38 each have a resistance of around 50 Ohm. A resistance below 200 Ohm is generally preferable.

In alternative embodiments, the temperature-dependent-resistance material com-prises or is platinum or a semiconductor.

In the depicted embodiment, the temperature sensors 38 are each located at a dis-tance of 10 µm from the respective, associated conductive contact elements 34. Generally, for the temperature sensor 38 to be arranged in the vicinity of a conductive contact ele-ments 34, it is beneficial if the distance between said temperature sensor 38 and the associ-ated conductive contact elements 34 does not exceed 100 µm, and preferably does not ex-ceed 50 µm.

Fig. 7 schematically illustrates a contact layer 30 for use in the method 10 according to some embodiments.

The contact layer 30 of Fig. 7 is similar to the contact layer 30 described above in the context of the other embodiments. Similar components are indicated with identical ref-erence numerals. For the sake of brevity, they will not be described again, but reference is made to the corresponding detailed description above. The following description focuses on the modifications introduced in the embodiment of Fig. 7.

The contact layer 30 of Fig. 7 further comprises through vias 40.

Each of the through vias 40 electrically connects an element 34, 36, 38 (said ele-ments 34, 36, 38 including the conductive contact elements 34, the heating element 36, and the temperature sensors 38; according to embodiments only some of those being present as described above) of the contact layer 32 to a point on a side of the contact layer 30 being opposite to the first side.

In other words, each of the through vias 40 electrically connects an element 34, 36, 38 on the bottom surface 30b of the contact layer 32 to a point on the top surface 30t of the contact layer 30.

According to embodiments, said element 34, 36, 38 is one of the conductive contact elements 34. In particular, according to some embodiments, a respective through via 40 exists for each of the conductive contact elements 34.

According to embodiments, said element 34, 36, 38 is one of the temperature sen-sors 38. In particular, according to some embodiments, a respective through via 40 or a pair of through vias 40 exists for each of the temperature sensors 38.

According to embodiments, said element 34, 36, 38 is the heating element 36. Ac-cording to some embodiments, a pair of through vias 40 exists for the heating element 36.

As shown in Fig. 7, and in particularly beneficial embodiments, a respective through via 40 or a pair of through via 40s exists for each of the conductive contact elements 34, a pair of through via 40s exists for the heating element 36, and a pair of through via 40s exists for each of the temperature sensors 38, as far as the respective element 34, 36, 38 exists in the specific embodiment of the contact layer 30.

Said through vias 40 beneficially allow for electrically contacting the element 34, 36, 38 from the top. The top side of the contact layer 30 is well available for contacting even when the contact layer 30 is arranged over the sample 20.

In the depicted embodiment, the through vias 40 each comprise an adhesion metal coating comprising chromium on the silicon nitride layer 32 and electrically highly conduc-tive metal inside of the adhesion metal coating. In the depicted embodiment, the highly con-ductive metal is gold. Alternative material compositions a possible as described above in the context of the conductive contact elements 34.

Fig. 8 schematically illustrates a contact layer 30 for use in the method 10 according to some embodiments.

The contact layer 30 of Fig. 8 is similar to the contact layer 30 described above in the context of the other embodiments. Similar components are indicated with identical ref-erence numerals. For the sake of brevity, they will not be described again, but reference is made to the corresponding detailed description above. The following description focuses on the modifications introduced in the embodiment of Fig. 8.

The contact layer 30 of Fig. 8 further comprises electrical contact structures 42.

Each of the electrical contact structures 42 is arranged on a side of the contact layer 30, or of the silicon nitride layer 32, respectively, opposite to the side of the contact layer 30, or of the silicon nitride layer 32, respectively, on which the conductive contact elements 34 are arranged.

In other words, the electrical contact structures 42 are arranged on the top surface 30t of the contact layer 30, or of the silicon nitride layer 32, respectively, whereas the con-ductive contact elements 34 are arranged on the bottom surface 30b of the contact layer 30, or of the silicon nitride layer 32, respectively.

Some or each of the elements 34, 36, 38 are/is connected to at least one of the elec-trical contact structures 42.

According to embodiments, said elements 34, 36, 38 includes the conductive contact elements 34. In particular, according to some embodiments, a respective electrical contact structure 42 exists for each of the conductive contact elements 34.

According to embodiments, said element 34, 36, 38 includes at least one of the tem-perature sensors 38. In particular, according to some embodiments, a respective contact structure 42 or a pair of electrical contact structures 42 exists for each of the temperature sensors 38.

According to embodiments, said element 34, 36, 38 includes the heating element 36. According to some embodiments, a pair of electrical contact structures 42 exists for the heating element 36.

As shown in Fig. 8, and in particularly beneficial embodiments, a respective electrical contact structure 42 or a pair of electrical contact structures 42 exists for each of the conductive contact elements 34, a pair of electrical contact structures 42 exists for the heating element 36, and a pair of electrical contact structures 42 exists for each of the temperature sensors 38, as far as the respective element 34, 36, 38 exists in the specific embodiment of the contact layer 30.

In the depicted embodiment, the electrical contact structures 42 take the exemplary form of bond pads. In alternative embodiments, the electrical contact structures may for example be solder bumps.

In the depicted embodiment, the electrical contact structures 42 each comprise an adhesion metal layer comprising chromium on the silicon nitride layer 32 and electrically highly conductive metal on the adhesion layer. In the depicted embodiment, the highly con-ductive metal is gold. Alternative material compositions are possible as described above in the context of the conductive contact elements 34.

The bond pads are dimensioned sufficiently large four wire bonding thereto, for ex-ample with a width of at least 20 µm or at least 50 µm along each horizontal direction.

In the depicted embodiment, each of the electrical contact structures 42 is connected to the associated element 34, 36, 38 using a through via 40. In alternative embodiments (not shown), one or all of the electrical contact structures 42 is/are connected to the associ-ated element(s) 34, 36, 38 in a different manner, for example using the electrical line de-picted in Fig. 2a, Fig. 3 or Fig. 6.

Said electrical contact structures 42 beneficially allow for electrically contacting the element 34, 36, 38 from the top. The top side of the contact layer 30 is well available for contacting even when the contact layer 30 is arranged over the sample 20.

The electrical contact structures 42 are particularly beneficial in combination with the through vias 40 electrically connected thereto and to the element 34, 36, 38. Respective embodiments allow for electrical contacting from the top of the contact layer 30, with the sides of the contact layer 30 being mostly free from electrical lines. This beneficially reduces the risk of damage to any of the electrical connections while the contact layer 30 is being arranged over the sample 20. Hence, the reliability of the method is improved.

Fig. 9a to Fig. 9g illustrate another embodiment of the method 10.

As shown in Fig. 9a, in a first process step, the contact layer 30 is provided.

In the depicted embodiment, the contact layer 30 is provided from a plurality of con-tact layers 30. A respective plurality of contact layers can be manufactured by adapting the techniques described in Christian N. Saggau et al., "2D high temperature superconductor integration in contact printed circuit boards," arXiv:2311.00602 [cond-mat.supr-con] (2023). The respective document is incorporated herein in its entirety by reference.

Also shown in Fig. 9a is a first sub-step of the process step of arranging 14 the con-tact layer 30 over the sample 20. More specifically, a surface of a transfer device 50 is ad-hered to the contact layer 30. The surface of the transfer device 50 is a surface of an elas-tomeric polymer. In the depicted embodiment, the transfer device 50 consists of said elas-tomeric polymer.

For adhering the transfer device 50 to the contact layer 30, the transfer device 50 is cooled below the glass transition temperature of the elastomeric polymer.

In the depicted embodiment, the elastomeric polymer is polydimethylsiloxane. It is cooled to -40°C to adhere the transfer device 50 to the contact layer 30.

After adhering the transfer device 50 to the contact layer 30, the contact layer 30 is lifted up by lifting up the transfer device 50 it adheres to.

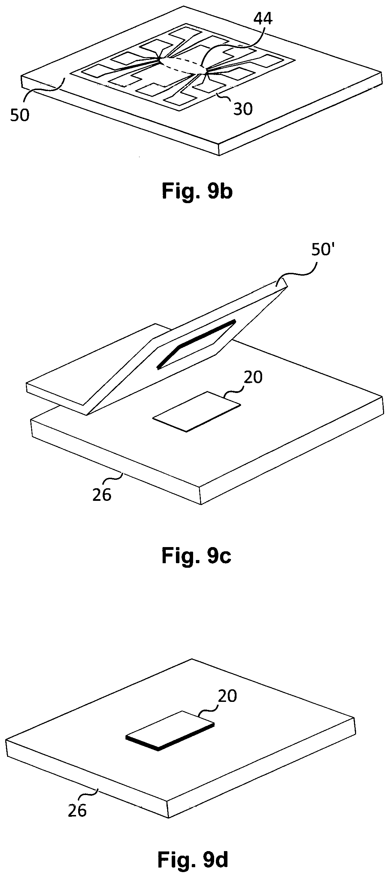

Fig. 9b shows the resulting transfer device 50 with the contact layer 30 adhering thereto.

In Fig. 9a, Fig. 9b, and in the following Fig. 9c - Fig. 9g, the section of the bottom surface 30b of the contact layer 30 with the elements 34, 36, 38 (including conductive con-tact elements 34, and/or heating element 36 and/or temperature sensor(s) 38) arranged thereon is not depicted in detail, but is indicated by the section 44. This serves the purpose of clarity of presentation. The respective elements 34, 36, 38 are in fact present in the sec-tion 44 indicated in Fig. 9a to Fig. 9g. According to different embodiments, the elements 34, 36, 38 are formed according to one of the embodiments described above in the context of Fig. 1a to Fig. 8.

During the process steps illustrated in Fig. 9a and Fig. 9b, the contact layer 30 is provided separate from the sample 20, which is shown in Fig. 9c, Fig. 9d.

According to the embodiment shown in Fig. 9c, Fig. 9d, the sample 20 is provided over a thermally insulating substrate 26. The thermally insulating substrate 26 is similar to the thermally insulating substrate 26 described above.

Fig. 9c illustrates an optional process step of cleaving the sample 20 using a second transfer device 50'. The second transfer device 50' is similar to the transfer device 50 de-scribed above. In embodiments wherein the optional cleaving step is not performed, the method proceeds to Fig. 9d and from there to Fig. 9e.

To cleave the sample, the second transfer device 50' is placed above the sample 20 in direct contact with the sample 20. The second transfer device 50' is then cooled to a tem-perature below the glass transition temperature of the elastomeric polymer comprised therein. In the depicted embodiment, the elastomeric polymer is polydimethylsiloxane. It is cooled to -40°C.

When the second transfer device 50' is cooled to the temperature below the glass transition temperature, it adheres to the sample 20. The second transfer device 50' is then lifted up, with part of the sample 20 adhering thereto. Another part of the sample 20 re-mains on the thermally insulating substrate 26. This finishes the optional sample cleaving step. The part of the sample 20 remaining on the thermally insulating substrate 26 is used in the subsequent process steps of the method. The second transfer device 50' with the part of the sample 20 adhering thereto is not used any further in the method.

Fig. 9e - Fig. 9g show further first sub-steps of the process step of arranging 14 the contact layer 30 over the sample 20.

In Fig. 9e, the transfer device 50 with the contact layer 30 arranged thereon is moved to a vicinity of the sample 20 arranged over the thermally insulating substrate 26.

Fig. 9f shows the central process step of arranging 14 the contact layer 30 over the sample 20, such that the first conductive contact element forms a first electrical contact with the sample 20 at the first position 22 along the sample 20 and that the second conduc-tive contact element forms a second electrical contact with the sample 20 at the second po-sition 24 along the sample 20.

This process step, according to some embodiments, involves alignment of the trans-fer device 50 with respect to the sample 20 and/or to the thermally insulating substrate 26.

For this purpose, first optical markers exist on the contact layer 30 and/or on the transfer device 50.

Second optical markers exist on the sample 20 and/or on the thermally insulating substrate 26.

The transfer device 50 is arranged over the thermally insulating substrate 26 such that the first optical markers are arranged according to a predefined arrangement over the second optical markers.

Alternatively, the transfer device 50 with the contact layer 30 arranged thereon is placed above the sample 20 according to an image from an imaging technique, said imag-ing technique providing a image of the sample 20 through the transfer device 50.

More specifically, according to some embodiments, the transfer device 50 with the contact layer 30 arranged thereon is placed above the sample 20 according to a microscope image showing the contact layer 30 and the sample 20 through the transfer device 50. The transfer device 50 with the contact layer 30 arranged thereon is orientated and located over the sample 20 according to said microscope image.

In Fig. 9g, the transfer device 50 is released from the contact layer 30 arranged over the sample 20 by heating the elastomeric polymer of the transfer device 50 to a temperature above its glass transition temperature, and lifting up the transfer device 50. The increased temperature of the elastomeric polymer significantly reduces the adhesion of the transfer device 50, facilitating the release of the contact layer 30 during the lift-up.

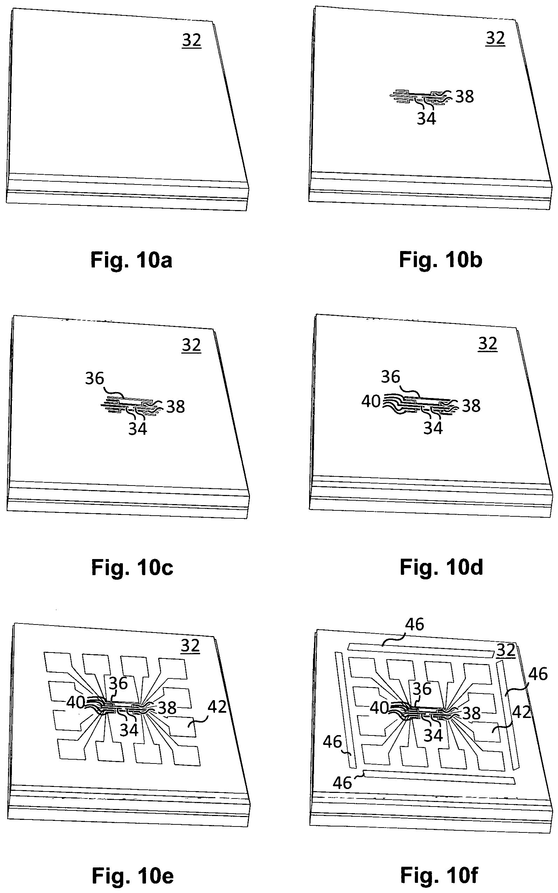

Fig. 10a to Fig. 10i illustrate the fabrication of a contact layer 30 according to an embodiment.

As shown in Fig. 10a, the fabrication of the contact layer 30 starts using a pristine Si/SiO2/Si (thicknesses: 10 µm /1 µm /2.5 µm) (silicon on insulator, SIO) contact layer sub-strate. The contact layer substrate is subjected to a 40-minute O2 plasma treatment to en-sure cleanliness. Then, a 3 nm thick Al2O3 sacrificial layer is deposited thereover using atomic layer deposition.

As shown in Fig. 10b, Fig. 10c, conductive contact elements 34 and temperature sensors 38 are established using photolithography in two steps: in the first step, Au (80 nm thick) is sputtered onto the contact layer substrate as a first layer, and in the second step Ti or Pt (thickness: 4 nm or 80 nm) is sputtered onto the first layer to complete the conductive contact elements 34 and the temperature sensors 38.

Fig. 10d shows the deposition of the silicon nitride layer 32 using plasma-enhanced chemical vapor deposition. This method allows for controlling the thickness and the elastici-ty of the silicon nitride layer 32.

Thereafter (not shown) reactive ion etching is applied to produce holes from the top surface to the bottom surface of the silicon nitride layer 32, for later deposition of the through vias 40, or at the positions of the through vias 40 to be formed, respectively.

Fig. 10e shows the fabrication of the electrical contact structures 42 in the form of bond pads 42 sized for wire bonding thereto. The fabrication uses a lithographic process and sputtering of Cr (4 nm thick) and thereafter of Au (80 nm thick).

Each of the resulting contact layers 30 has an area in the horizontal plane of 750 µm × 750 µm.

49 contact layers 30 are produced per square centimeter of the contact layer sub-strate.

To mechanically separate said contact layers 30 from one another, deep reactive ion etching was performed at -120°C to etch through the silicon nitride layer 32 and reach the contact layer substrate. Respective process steps are illustrated in Fig. 10f and Fig. 10g.

Fig. 10h and Fig. 10i show the release of the so-separated contact layer 30 from the contact layer substrate. For this purpose, a 3 nm thick layer of Al2O3 was deposited on the contact layers 30. Thereafter, the Si of the contact layer substrate is etched away using XeF2 gas. The deposited 3 nm thick layer of A12O3 protects the contact layer 30 during this etching step. Subsequent to the Si etching, the Al2O3 layer is etched away. This generates a freestanding contact layer 30.

For cleaning, the freestanding contact layer 30 is kept in isopropanol for at least 4 h. Then, critical point drying is performed with respect to the isopropanol.

Fig. 11 shows a contact layer 30 arranged over a sample 20 according to an experi-mentally obtained microscope image.

Said microscope image was taken through the silicon nitride layer 32 of the contact layer 30, making use of its transparency.

Fig. 12 illustrates the heat gradient obtained from simulations of the heat distribu-tion for the case of a contact layer 30 arranged over a sample 20 arranged over a thermal-ly insulating substrate 26, the thermally insulating substrate 26 being a fused silica sub-strate 26, in a horizontal plane x, y.

In the simulations, heat is provided using the heating element 36 arranged at the center of the coordinate system. Said heating element 36 extends along the horizontal y direction with a length of 190 µm.

As can be seen from Fig. 12, horizontally extending regions with an approximately homogeneous heat gradient form to the left and to the right of the heating element 36.

More specifically, over a horizontally extending region with a size of 450 µm x 50 µm to each side of the heating element 36, the temperature gradient is approximately con-stant with a peak to valley variation of 10%.

Also, over a horizontally extending region with a size of 200 µm x 55 µm to each side of the heating element 36, the temperature gradient is approximately constant with a peak to valley variation of 10%.

The respective regions are particularly suitable for placing the positions 24 along the sample 20 within them, since this ensures a homogeneous temperature gradient during the voltage measurement of the method 10.

In other words, the respective regions define regions along the bottom surface 30b of the contact layer 30, within which the conductive contact elements 34 are preferably placed. This ensures that, when the contact layer 30 with the respective conductive contact elements 34 is placed over a sample 20, the first electrical contact and the second electrical contact form at positions with a homogeneous temperature gradient between them during the voltage measurement of the method 10.

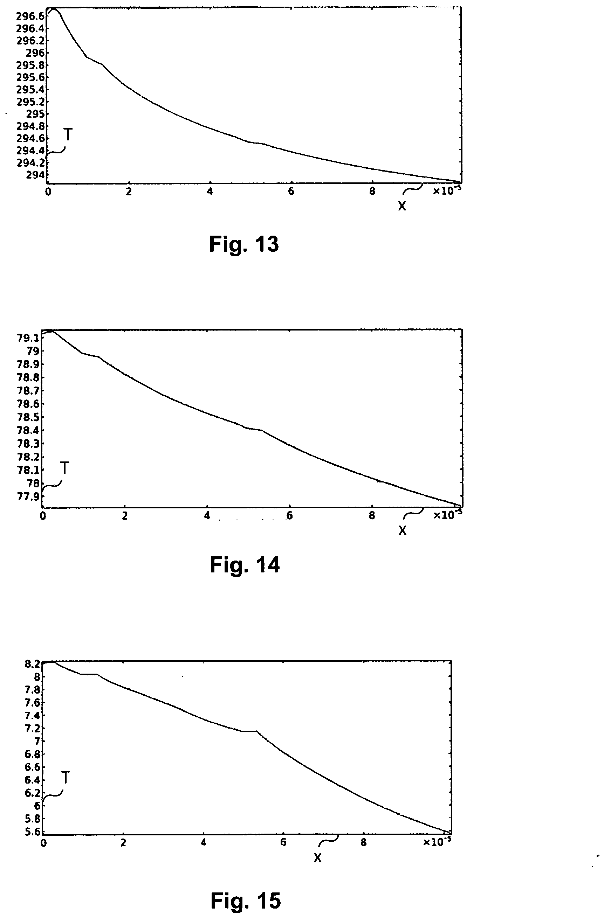

Fig. 13, Fig. 14, and Fig. 15, show the temperature T along the line 48 of Fig. 12 (at a vertical position, i.e., along the z direction, corresponding to the vertical position of the heating element 36).

In Fig. 13, Fig. 14, and Fig. 15, the temperature along the line 48 is shown for a dif-ferent base temperature in each of said figures, the base temperature referring to the tem-perature of the sample 20 far away from the heating element 36.

As Fig. 13, Fig. 14, and Fig. 15 demonstrate, within a region extending to a distance of up to about 100 µm along the horizontal direction x the temperature decreases approxi-mately linearly away from the heating element 36.

Hence, a respective distance of the positions 24 along the sample 20, or of the con-ductive contact elements 34, respectively, from the heating element 36 is particularly bene-ficial in the method 10, for the reasons laid out above in detail in the context of Fig. 12.

The examples of the present disclosure disclosed herein only constitute specific ex-amples for illustration purposes. The present invention can be implemented in various ways and with many modifications without altering the underlying basic properties. There-fore, the present invention is only defined by the claims as stated below.

## Claims

1. A method (10) for measuring a voltage (V) between a first position (22) and a second position (24) along a sample (20), said voltage (V) being induced by a temperature gradient in a region between the first position (22) and the second position (24), the method (10) comprising:
providing (12) a contact layer (30) separate from the sample (20), the contact layer (30) comprising a silicon nitride layer (32) and a plurality of conductive contact elements (34), the plurality of conductive contact elements (34) comprising a first conductive contact element and a second conductive contact element, and the silicon nitride layer (32) electrically insulating said first and second conductive contact elements (34) from one another;
arranging (14) the contact layer (30) over the sample (20) such that the first conductive contact element forms a first electrical contact with the sample (20) at the first position (22) along the sample (20) and that the second conductive contact element forms a second electrical contact with the sample (20) at the second position (24) along the sample (20);
providing (16) heat to the sample (20) to generate said temperature gradient; and
measuring (18) the voltage (V) between the first conductive contact element and the second conductive contact element.

2. The method (10) of claim 1,
wherein the contact layer (30) provided separately from the sample (20) further comprises a heating element (36), the silicon nitride layer (32) electrically insulating the conductive contact elements (34) from the heating element (36); and wherein the heat is provided to the sample (20) from said heating element (36); wherein, optionally, in the process step of arranging the contact layer (30) over the sample (20), the heating element (36) is arranged in a vicinity of the sample (20).

3. The method (10) of claim 2,
wherein the contact layer (30) is arranged over the sample (20) such that the heating element (36) arranged over the sample (20) is electrically insulated from the sample (20), in particular by the silicon nitride layer (32) or at least in part by the silicon nitride layer (32); and/or
wherein a spatial extension of the heating element (36) along a direction perpendicular to a reference line connecting the first position (22) and the second position (24) exceeds a minimum distance between the heater and any of the first position (22) in the second position (24), in particular at least by a factor of two or at least by a factor of three; and/or
wherein the heating element (36) comprises or is a resistor, in particular a resistor with a resistance of at least 10 Ohm or at least 50 Ohm or at least 100 Ohm and/or with a cross-sectional width in the range from 1 µm to 10 µm; and/or wherein, in the process step of arranging the contact layer (30) over the sample (20), the contact layer (30) is arranged over the sample (20) such that the heating element (36) is not arranged above the sample (20) along the vertical direction; and/or
wherein the heating element (36) is arranged at a bottom surface of the silicon nitride layer (32) when the contact layer (30) is arranged over the sample (20); and/or
wherein, when the contact layer (30) is arranged over the sample (20), the heating element (36) is arranged closer to a surface of the silicon nitride layer (32) contacting the sample (20) than to a top surface of the silicon nitride layer (32); and/or
wherein a distance between the heating element (36) and one or both of the first conductive contact element and the second conductive contact element is 0.5 mm or less, in particular in the contact layer (30) provided separate from the sample (20) and/or after arranging the contact layer (30) over the sample (20).

4. The method (10) according to any of the preceding claims,
wherein the silicon nitride layer (32) is sufficiently thin for the contact layer (30) to be mechanically flexible; and/or
wherein the silicon nitride layer (32) and/or the contact layer (30) has a thickness of 1 µm or less.

5. The method (10) of any of the preceding claims, wherein the sample (20) is located above a thermally insulating substrate (26) when the heat is provided to the sample (20) and when the voltage (V) is measured between the first conductive contact element and the second conductive contact element, in particular, wherein the thermally insulating substrate (26) comprises fused silica and/or the thermally insulating substrate (26) has a heat conductivity smaller than 2 W/(m · K), wherein, optionally, in the process step of arranging the contact layer (30) over the sample (20), the sample (20) is encapsulated between the contact layer (30) and the thermally insulating substrate (26), in particular in an air-tight manner, and/or wherein the thermally insulating substrate (26) is electrically insulating, and/or wherein the sample (20) is located above a polished surface of the thermally insulating substrate (26).

6. The method (10) of any of the preceding claims,
wherein the contact layer (30) provided separate from the sample (20) further comprises at least one temperature sensor (38);
wherein, in the process step of arranging the contact layer (30) over the sample (20), the at least one temperature sensor (38) is arranged in a vicinity of one of the first electrical contact or the second electrical contact; and
wherein the method (10) further comprises measuring, using the at least one temperature sensor (38), a temperature in the vicinity of one of the first electrical contact or the second electrical contact when the voltage (V) is measured between the first conductive contact element and the second conductive contact element.

7. The method (10) of claim 6,
wherein the at least one temperature sensor (38) comprises or is a resistor, the resistor having a temperature-dependent resistance, and the silicon nitride layer (32) electrically insulating the conductive contact elements (34) from the at least one resistor;
wherein the measuring of the temperature in the vicinity of one of the first electrical contact or the second electrical contact comprises determining a resistance of the resistor to determine said temperature based on the determined resistance;
in particular, wherein the resistor of the at least one temperature sensor (38) has a smaller resistance than the resistor of the heating element (36), and/or wherein the resistor of the at least one temperature sensor (38) has stronger temperature dependence than the resistor of the heating element (36), and/or wherein determining the resistance of the resistor uses a four-point measurement.

8. The method (10) of claim 6 or 7,
wherein, in the process step of arranging the contact layer (30) over the sample (20), the contact layer (30) is arranged over the sample (20) such that the at least one temperature sensor (38) is arranged above the sample (20) along the vertical direction; and/or
wherein, when the contact layer (30) is arranged over the sample (20), the at least one temperature sensor (38) is arranged at a bottom surface of the silicon nitride layer (32); and/or
wherein, when the contact layer (30) is arranged over the sample (20), the at least one temperature sensor (38) is arranged closer to a surface of the silicon nitride layer (32) contacting the sample (20) than to a top surface of the silicon nitride layer (32).

9. The method (10) of any of claims 6 to 8, wherein the contact layer (30) provided separate from the sample (20) further comprises a plurality of temperature sensors including the at least one temperature sensor (38) and at least one additional temperature sensor (38), and wherein the method (10) comprises:
in the process step of arranging the contact layer (30) over the sample (20), arranging the at least one temperature sensor (38) in a vicinity of the first electrical contact and arranging the at least one additional temperature sensor (38) in a vicinity of the second electrical contact;
measuring, using the at least one temperature sensor (38), a temperature in the vicinity of the first electrical contact when the voltage (V) is measured between the first conductive contact element and the second conductive contact element; and
measuring, using the at least one additional temperature sensor (38), an additional temperature in the vicinity of the second electrical contact when the voltage (V) is measured between the first conductive contact element and the second conductive contact element;
wherein, optionally, one or all of the features specified in claims 7 or 8 apply correspondingly to the at least one additional temperature sensor (38) and/or to the additional temperature.

10. The method (10) of any of the preceding claims, wherein the contact layer (30) comprises electrical contact structures (42) above the silicon nitride layer (32), each of the conductive contact elements (34) being electrically connected to at least one of said electrical contact structures (42) via a respective lead comprised in the contact layer (30), and wherein the voltage (V) between the first conductive contact element and the second conductive contact element is measured via the electrical contact structures (42),
wherein, optionally, the electrical contact structures (42) are dimensioned to be suitable for wire bonding thereto.

11. The method (10) according to any of the preceding claims,
wherein, in the process step of providing the heat to the sample (20), a suitable amount of heat is provided to the sample (20) to generate a temperature gradient between the first position (22) and the second position (24) in a range from 1000 K per meter of distance between the first position (22) and the second position (24) to 10,000 K per meter of distance between the first position (22) and the second position (24); and/or
wherein the voltage (V) between the first conductive contact element and the second conductive contact element is measured while the heat is being provided to the sample (20).

12. The method (10) according to any of the preceding claims, wherein the process step of arranging the contact layer (30) over the sample (20) comprises adhering a surface of transfer device (50) to the contact layer (30), wherein the surface of the transfer device is a surface of an elastomeric polymer, and releasing the surface of the transfer device from the contact layer (30) by increasing the temperature of the surface of the transfer device, in particular, wherein the elastomeric polymer comprises or is polydimethylsiloxane.

13. The method (10) according to any of the preceding claims,
wherein the method (10) further comprises, prior to arranging the contact layer (30) over the sample (20), heating the contact layer (30) to a temperature above 90°C, in particular to desorb water from the contact layer (30); and/or
wherein the method (10) further comprises cooling at least a portion of the sample (20) to a temperature below 0°C while the voltage (V) between the first conductive contact element and the second conductive contact element is measured; and/or
wherein the first position (22) and the second position (24) are positions along a surface (20a) of the sample (20).

14. A contact layer (30) for measuring a voltage (V) between a first position (22) and a second position (24) along a sample (20), said voltage (V) being induced by a temperature gradient in a region between the first position (22) and the second position (24), the contact layer (30) comprising:
a silicon nitride layer (32);
a plurality of conductive contact elements (34), the plurality of conductive contact elements (34) comprising a first conductive contact element and a second conductive contact element, the silicon nitride layer (32) electrically insulating said first and second conductive contact elements (34) from one another; and
a heating element (36) adapted to provide heat to the sample (20) to generate said temperature gradient;
wherein the silicon nitride layer (32) is sufficiently thin for the contact layer (30) to be mechanically flexible.

15. The contact layer (30) according to claim 14,
wherein the contact layer (30) further comprises at least one temperature sensor (38), in particular, wherein the at least one temperature sensor (38) is arranged in a vicinity of one of the first conductive contact element and the second conductive contact element; and wherein the at least one temperature sensor (38) is adapted for measuring the temperature in said vicinity of one of the first conductive contact element and the second conductive contact element; and/or
wherein the contact layer (30) comprises electrical contact structures (42) above the silicon nitride layer (32), each of the conductive contact elements (34) being electrically connected to at least one of said electrical contact structures (42) via a respective lead comprised in the contact layer (30).
